# EUROPÄISCHE PATENTANMELDUNG

(11) **EP 1 400 172 A1**
(43) Veröffentlichungstag der Anmeldung: **24.03.2004**
(21) Anmeldenummer: 03001400.5
(22) Anmeldetag: 27.01.2003
(51) Int. Cl.: A01M 23/38, A01M 19/00, A01M 23/24, A01M 23/26, A01M 23/36, A01M 27/00, A01M 25/00

(54) **Verfahren und Vorrichtung zum Töten von Tieren, insbesondere zum Töten von Ratten**

(30) Priorität: 18.09.2002 DE 20214517 U
(71) Anmelder: Otto, Stephan, 33034 Brakel (DE)
(72) Erfinder: Otto, Stephan, 33034 Brakel (DE)
(74) Vertreter: Freiherr von Gravenreuth, Günter, Dipl.-Ing. (FH)

(57) **Zusammenfassung**

Verfahren und Vorrichtung zum Töten von Tieren, bei welchem mindestens ein thermischer Sensor (80) angeordnet ist, welcher über eine Datenleitung mit einer Auswertungseinheit (83) zur Auslösung der Tötungsvorrichtung (2) verbunden ist.

## Beschreibung

Die Erfindung betrifft ein Verfahren und eine Vorrichtung zum Töten von Tieren, insbesondere von Ratten.

Seit Jahrhunderten gibt es zum Fangen und Töten von Tieren Fallen aller Art. Der Nachteil dieser Fallen ist, dass sie laufend kontrolliert werden müssen. Im übrigen führen Schlagfallen oft zu unerwünschten Verstümmelungen von Tieren, ohne sie sofort zu töten.

Bekannt ist ferner das Auslegen von Giften aller Art. Diese gefährden jedoch auch Menschen und andere Tiere.

Der Erfindung liegt daher die Aufgabe zugrunde, Verfahren und eine Vorrichtung zur Durchführung dieses Verfahrens schaffen, welche einerseits das Tier schnell tötet, andererseits innerhalb relativ kurzer Zeit wieder in die Arbeitsposition gebracht wird, sodass nach kurzer Zeit auch ein nächstes Tier getötet werden kann. Diese Aufgabe wird erfindungsgemäß durch den kennzeichnenden Teil des Anspruchs 1 bzw. 7 gelöst.

Die Erfindung wird nachfolgend am Beispiel von Ratten erläutert. Die Erfindung ist jedoch nicht auf die Tötung von Ratten beschränkt.

Ratten bewegen sich in erheblichem Umfang in Kanalisationssystemen. Ratten haben dort ein regelrechtes "Straßennetz". Die Erfindung wird bevorzugt in derartigen "Tierstraßen" eingesetzt.

An mindestens einem Ende, vorzugsweise an beiden Enden der erfindungsgemäßen Vorrichtung befindet sich mindestens ein thermischer Sensor. In erfindungsgemäßer Weise kann auch innerhalb der Vorrichtung mindestens ein weiterer thermischer Sensor vorgesehen sein. Wenn ein Tier in diesem Bereich der Vorrichtung gelangt, erfasst einer dieser thermischen Sensoren die vom Tier ausgehende Körperwärme und stellt fest, dass diese höher ist als die Umgebungstemperatur. Aufgrund dieser Feststellung wird eine Tötungsvorrichtung ausgelöst.

Der thermische Sensor erfasst laufend die Temperatur in seinem Einzugsbereich. Der thermische Sensor kann mit einem Analog-Digital-Wandler verbunden sein. Der thermische Sensor übermittelt laufend seine Messwerte an eine Auswertungseinheit. Diese Auswertungseinheit überprüft im Rahmen eines IF-THEN-ELSE-Vergleichs, ob die vom thermischen Sender kommenden Werte oberhalb einer definierten Grenztemperatur liegen. Sobald dieser Grenzwert überschritten wird, geht ein Auslösesignal an eine Abschussvorrichtung für das Messer.

Die Tötungsvorrichtung kann hierbei konstruktiv sehr unterschiedlich gelöst sein. In erfindungsgemäßer Weise kann es sich hierbei um
a) ein schlagendes oder fallendes Messer, und/oder
b) eine Vorrichtung für elektrische Stromschläge, und/oder
c) eine Vergasungs- oder Vergiftungsvorrichtung und/oder
d) eine Vorrichtung für hochfrequente energiereiche Strahlung, beispielsweise Mikrowellen
handeln.

In erfindungsgemäßer Weise kann die Tötungsvorrichtung ein schlagendes oder fallendes Messer sein. Dieses Messer schlägt oder fällt nach unten und tötet das Tier. Bei nur einem Messer besteht das Risiko, dass das Tier noch nicht sofort tot ist, bzw. nur verstümmelt wird. Aus diesem Grunde ist es besonders vorteilhaft, wenn eine Batterie hintereinander angeordneter Messer in der Vorrichtung vorgesehen ist.

Das (oder die) Messer sind in ihrem Weg begrenzt, das heißt, sie schlagen durch das Tier durch, jedoch nicht auf dem Boden auf. Hierdurch wird eine Beschädigung der Schneide(n) verhindert.

Soweit die Vorrichtung in (Ab-) Wasserkanälen angeordnet ist, reduziert das Messer den Leitungsquerschnitt. Aus diesem Grund ist es vorteilhaft, wenn das Messer selbst nur eine geringe Bauhöhe aufweist.

Diese erfindungsgemäße Lösung beinhaltet drei technische Alternativen. Nach der einen Alternative kommt das/kommen die Messer senkrecht oder im wesentlichen senkrecht von oben. Nach einer anderen Alternative wird das/werden die Messer geschwenkt. Nach einer dritten Alternative wird das/werden die Messer scherenartig geschlossen.

Bei einer Schwenkkonstruktion ist immer ein Antrieb erforderlich, jedoch auch bei der senkrechten Anordnung reicht das Eigengewicht nicht aus um eine ausreichende Schlagkraft durch den freien Fall zu erzielen.

In erfindungsgemäßer Weise ist daher das Messer mit einer Abschussvorrichtung verbunden. Die Abschussvorrichtung kann konstruktiv unterschiedlich gelöst werden.

Nach einer erfindungsgemäßen Lösung besteht die Abschussvorrichtung aus einem vorgespannten Federpaket, welches das Messer in Richtung des Tieres katapultiert, wenn von dem thermischen Sensor das Signal kommt.

Die Abschussvorrichtung kann jedoch bei der senkrechten Anordnung auch als Elektromagnet bestehen. In der Ruheposition haben diese Elektromagnete ein gegensätzliches Potential, sodass das Messer in seiner oberen Position gehalten wird. Wenn von dem thermischen Sensor das Signal kommt, wird die Polarität von einem Elektromagneten geändert, sodass sich die Elektromagnete abstoßen. Wenn ein Elektromagnet mit dem Messer verbunden ist, dann wird dieses in Richtung des zu tötenden Tieres abgeschossen.

In erfindungsgemäßer Weise ist es möglich, dass eines oder beide Elektromagneten wie ein Linearmotor ausgebildet sind, sodass hierüber das Abschießen und anschließend auch eine Rückführung in die Ausgangsposition ermöglicht wird.

Alle Abschussvorrichtungen benötigen auch eine Rückholvorrichtung für das Messer. Soweit diese Rückholvorrichtung nicht in dem soeben beschriebenen Linearmotor oder einer ähnlichen elektromagnetischen Lösung besteht, sind elektromagnetische Konstruktionen vorteilhaft.

In erfindungsgemäßer Weise kann bei der senkrechten Anordnung eine Spindel oder eine Zahnstange vorgesehen sein, welche ihrerseits mit dem Messer verbunden ist.

Die Energieversorgung für die thermischen Sensoren, Elektromagnete und Elektromotoren erfolgt vorzugsweise über eine Batterie, kann in erfindungsgemäßer Weise jedoch auch mit (über das normale) Stromnetz erfolgen.

Soweit die erfindungsgemäße Vorrichtung für den Einsatz in Röhren vorgesehen ist, müssen die Fallmesser an die innere Rohrkrümmung angepasst werden. Insoweit ist es vorteilhaft, für die gängigen Rohrdurchmesser abgestufte Vorrichtungen vorzusehen. In erfindungsgemäßer Weise kann jedoch auch vorgesehen werden, dass die Fallmesser auswechselbar sind, sodass eine erfindungsgemäße Vorrichtung für verschiedene Rohrdurchmesser verwendet werden kann. In diesem Fall kann die Vorrichtung auf einem verstellbaren Rahmen angeordnet sein, welcher in horizontaler Richtung verstellbar ist. Hierdurch wird erreicht, dass unabhängig vom Rohrdurchmesser die jeweiligen Fallmesser weitestgehend identische Positionierungen gegenüber der Rohrinnenwand erhalten, und dies unabhängig von den jeweils angetroffenen Rohrdurchmessern.

Eine weitere erfindungsgemäße Lösung besteht in einer scherenartigen Bewegung. Hierbei kann entweder ein Messer gegen eine Druckplatte bewegt werden oder in besonders vorteilhafter Weise zwei Messer scherenartig aufeinander zu.

Sowohl die schwenkartige konstruktive Lösung, als auch die scherenartige konstruktive Lösung ist in jeder Position, bezogen auf die Horizontale, anordenbar. In vorteilhafter Weise wird jedoch die schwenkartige Lösung in der Horizontalen und die scherenartige Lösung in der Vertikalen angeordnet. In erfindungsgemäßer Weise müssen alle Rückholvorrichtungen konstruktiv so ausgestaltet sein, dass bei Auslösung der Abschussvorrichtung keine kraftschlüssige Verbindung mehr vorhanden ist.

In erfindungsgemäßer Weise kann die Tötungsvorrichtung auch eine Vorrichtung für einen starken elektrischen Stromschlag sein. Hierzu wird in der "Tierstraße" eine Metallplatte angeordnet. Wenn das Tier sich vorhersehbar wohl auf der Metallplatte befindet, spricht der thermische Sensor an und legt eine elektrische Spannung, vorzugsweise eine Hochspannung, an einen elektrischen Spannungsträger an. Der elektrische Spannungsträger ist vorzugsweise gegenüber der Metallplatte angeordnet. Die Spannung ist so dimensioniert, dass auch in einer feuchten Umgebung es nicht zu einem Spannungsüberschlag unmittelbar vom Spannungsträger zur Metallplatte kommt. Dies ist insbesondere dann von Vorteil, wenn in Folge eines technischen Defektes der Spannungsträger unter Strom gesetzt wird. Wenn dagegen sich auf der Metallplatte ein Tier befindet, so ist der Abstand zwischen dem Spannungsträger und dem Tier geringer als der Abstand zwischen der Metallplatte und dem Spannungsträger, so dass es zu einem (für das Tier tödlichen) Spannungsüberschlag kommt. Zur Vermeidung einer Ableitung dieses elektrischen Stromes durch das Kanalnetz ist es in erfindungsgemäßer Weise vorteilhaft, die Metallplatte gesondert zu erden.

Eine weitere erfindungsgemäße Lösung besteht in einer Tötungsvorrichtung, bei welcher über eine Einlassöffnung toxische Mittel, beispielsweise Giftgas und/oder eine giftige Flüssigkeit, eingesprüht werden. Dies erfolgt dann, wenn das Tier den thermischen Sensor aktiviert. Das Giftgas wirkt hierbei über die Atemwege, giftige Chemikalien gelangen auf die Haare, bzw. die Haut des Tieres und werden von dort im Rahmen des Reinigungsvorganges durch das Tier aufgenommen. Durch den nur kurzzeitigen, aber hochkonzentrierten Einsatz toxischer Mittel ist sichergestellt, dass durch die natürliche Verdünnung dieser toxischen Mittel durch die Luft, bzw. die in der Kanalisation befindliche Flüssigkeit kein anderweitiger Schaden verursacht wird.

Eine weitere erfindungsgemäße Tiertötungsvorrichtung besteht aus dem Einsatz von vorzugsweise hochfrequenter und energiereiche Strahlung. Wenn dass zu tötende Tier den thermischen Sensor aktiviert, wird eine entsprechende Strahlungsquelle kurzzeitig aktiviert. In erfindungsgemäßer Weise ist der Einsatz von Mikrowellenstrahlung besonders vorteilhaft.

In erfindungsgemäßer Weise ist auch die Kombination mehrerer der vorgenannten Tötungsvorrichtungen möglich. Hierdurch wird die Effizienz des Systems erhöht.

Bei allen erfindungsgemäßen Lösungen ist es ferner vorteilhaft, wenn Absperrvorrichtungen für Menschen angeordnet sind. Mit derartigen Absperrvorrichtungen kann verhindert werden, dass im Rahmen von Wartungsarbeiten oder anderweitig unbeabsichtigt jemand den thermischen Sensor auslöst und somit durch die Tötungsvorrichtung zu Schaden kommt. Diese Absperrvorrichtung kann ein Bügel oder ein Gitter sein.

In erfindungsgemäßer Weise kann eine Absperrvorrichtung auch eine Lichtschranke sein. Eine Unterbrechung der Lichtschranke bewirkt, dass für die Dauer der Unterbrechung eine Auslösung der Tötungsvorrichtung nicht erfolgt. Letzteres kann durch eine Unterbrechung des Auslösesignals, welches von einer Auswertungseinheit zur Tötungsvorrichtung führt, erreicht werden. Eine derartige Lichtschranke muss jedoch soweit von dem thermischen Sensor entfernt sein, dass nicht gleichzeitig die Lichtschranke unterbrochen und der thermische Sensor bereits anspricht.

In erfindungsgemäßer Weise müssen alle Rückholvorrichtungen konstruktiv so ausgestaltet sein, dass bei Auslösung der Abschussvorrichtung keine kraftschlüssige Verbindung mehr vorhanden ist.

Die Energieversorgung für die thermischen Sensoren, Elektromagnete, Elektromotoren, dem Spannungsträger, elektromagnetische Düsen für die Einlassöffnung von toxischen Stoffen oder für die hochfrequente Strahlung erfolgt vorzugsweise über eine Batterie, kann in erfindungsgemäßer Weise jedoch auch mit (über das normale) Stromnetz erfolgen.

Weitere Vorteile der erfindungsgemäße Vorrichtung ergeben sich aus dem Ausführungsbeispiel in Verbindung mit der Zeichnung. Hierbei zeigt:
Figur 1 zeigt eine Vorrichtung zum Töten von Tieren mit einem Messer;
Figur 2 zeigt eine detaillierte Darstellung einer Vorrichtung gemäß Figur 1;
Figur 3 zeigt eine Vorrichtung zum Töten von Tieren in einer abgewandelten Ausführungsform;
Figur 4 zeigt eine detaillierte Darstellung einer Rückholvorrichtung 4 gemäß Figur 3;
Figur 5 zeigt eine andere Rückholvorrichtung 4 gemäß der zweiten Figur 3;
Figur 6 zeigt eine Vorrichtung zum Töten von Tieren in einer weiteren Ausführungsform;
Figur 7 zeigt eine Abwandlung der dritten Ausführungsform gemäß Figur 6;
Figur 8 zeigt eine Tötungsvorrichtung mit Hilfe einer elektrischer Spannung.
Figur 9 zeigt eine Tiertötungsvorrichtung mit dem Einsatz von toxischen Mitteln.
Figur 10 zeigt eine Tiertötungsvorrichtung unter Verwendung einer hochfrequenten Strahlung.
Figur 11 zeigt eine schematische Darstellung der Gesamtanlage.

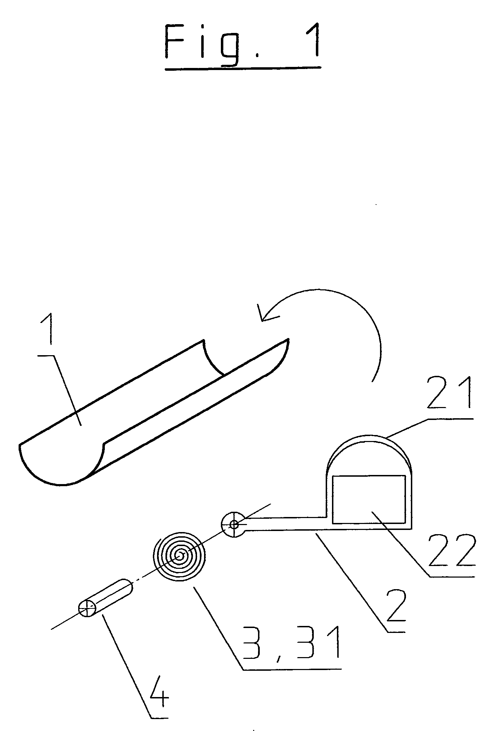

Figur 1 zeigt eine Vorrichtung zum Töten von Tieren in einer ersten Ausführungsform. Schematisch ist eine Rinne in einer Kanalisation oder ein unterer Abschnitt eines Rohres dargestellt. Dies wird nachfolgend als Rinne 1 bezeichnet. In die Rinne 1 schlägt ein Messer 2. Eine Schneide 21 des Messers 2 ist hierbei bogenförmig ausgebildet, wobei deren Krümmung jener der Rinne 1 entspricht. Zur Vermeidung eines Status in der Rinne 1 besitzt das Messer 2 einen Durchbruch 22.

Das Messer 2 ist mit einem Federpaket 3 verbunden. Das Federpaket 3 ist in dieser Ausführungsform eine Spiralfeder 31.

Ferner ist das Messer 2 und das Federpaket 3 mit einer (nur schematischen dargestellten) Rückholvorrichtung 4 verbunden.

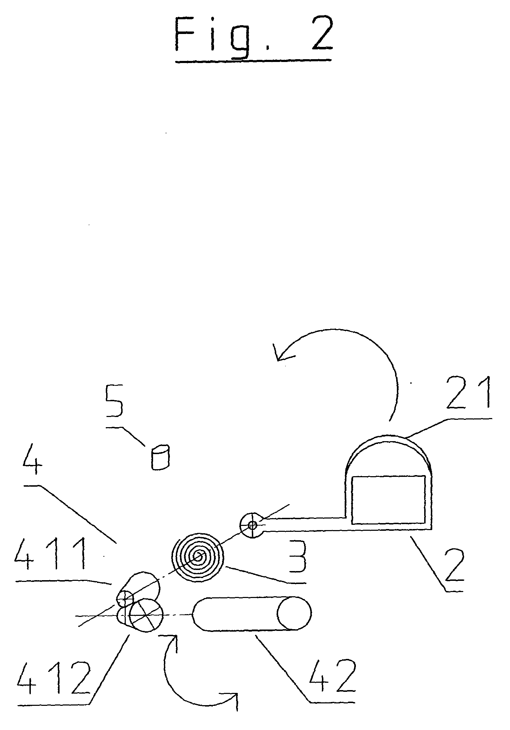

Figur 2 zeigt eine erfindungsgemäße Lösung der Rückholvorrichtung 4 für die Ausführungsform gemäß Figur 1. In dieser Ausführungsform besteht die Rückholvorrichtung 4 aus der Paarung zweier Kegelräder 411 und 412. Das eine Kegelrad 411 ist hierbei mit dem Federpaket 3 und dem Messer 2 verbunden. Das andere Kegelrad 412 ist mit einem Antriebsmotor 42 verbunden. Die Paarung Kegelrad 412 und Antriebsmotor 42 ist schwenkbar angeordnet (nicht näher dargestellt) sodass die Kegelradpaarung 411/412 gelöst werden kann. Wenn das Federpaket 3 gespannt ist, bewirkt eine Lösung der Kegelradpaarung 411/412, dass das Federpaket 3 sich entspannt und somit das Messer 2 schlagartig schwenkt.

Damit das Messer 2 nicht in der Rinne (nicht dargestellt) aufschlägt, ist ein Begrenzungselement 5 angeordnet. Das Begrenzungselement 5 bewirkt, dass die Schneide 21 des Messers 2 nicht auf den Grund der Rinne (nicht dargestellt) durchschlägt. In erfindungsgemäßer Weise kann das Begrenzungselement 5 elastisch ausgestaltet sein, beispielsweise aus Gummi bestehen oder ein Federelement darstellen.

In erfindungsgemäßer Weise kann anstelle der Kegelradpaarung 411/412 auch eine Paarung zwischen einem Zahnrad und einem Spindelrad (nicht dargestellt) vorgesehen sein. Spindelräder haben den Vorteil, dass sie selbsthemmend sind, sodass das Federpaket 3 sicht nicht selbständig abwickeln kann, wenn beispielsweise die Antriebsenergie des Antriebsmotor 42 ausfällt. Bei einer Kegelradpaarung 411/412 muss ein mechanisches Element, beispielsweise eine Sperrklinke (nicht dargestellt) ein unerwünschtes Aufwickeln des Federpaketes 3 verhindern.

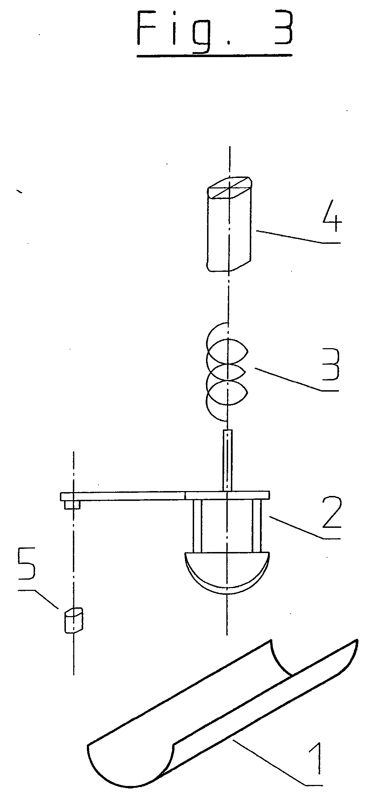

Figur 3 zeigt eine Vorrichtung zum Töten von Tieren in einer zweiten Ausführungsform. Schematisch ist eine Rinne in einer Kanalisation oder ein unterer Abschnitt eines Rohres dargestellt. Dies wird nachfolgend als Rinne 1 bezeichnet. In die Rinne 1 schlägt das Messer 2.

Eine Schneide 21 des Messers 2 ist hierbei bogenförmig ausgebildet, wobei deren Krümmung jener der Rinne 1 entspricht. Zur Vermeidung eines Staus in der Rinne 1 besitzt das Messer 2 einen Durchbruch 22.

Das Messer 2 ist mit einem Federpaket 3 verbunden. Das Federpaket 3 ist in dieser Ausführungsform eine Wendelfeder 32.

Ferner ist das Messer 2 und das Federpaket 3 mit einer (nur schematisch dargestellt) Rückholvorrichtung 4 verbunden.

Damit das Messer 2 nicht in der Rinne (nicht dargestellt) aufschlägt, ist ein Begrenzungselement 5 angeordnet. Das Begrenzungselement 5 bewirkt, dass die Schneide 21 des Messers 2 nicht auf den Grund der Rinne (nicht dargestellt) durchschlägt. In erfindungsgemäßer Weise kann das Begrenzungselement 5 elastisch ausgestaltet sein, beispielsweise aus Gummi bestehen oder ein Federelement darstellen.

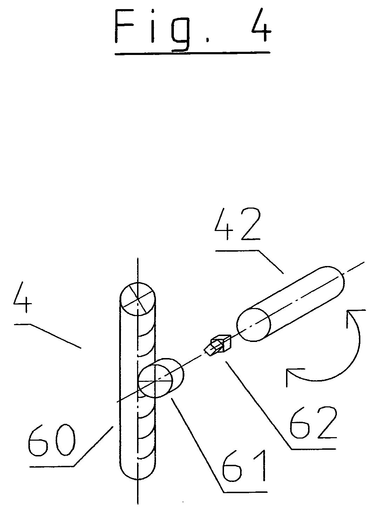

Figur 4 zeigt eine detaillierte Darstellung einer Rückholvorrichtung 4 gemäß der zweiten Ausführungsform. In diesem Fall besteht die Rückholvorrichtung 4 aus einer Gewindestange 60 in die ein Zahnrad 61 eingreift. Das Zahnrad 61 ist mit einem Antriebsmotor 42 verbunden. Vorzugsweise die Einheit zwischen dem Antriebsmotor 42 und dem Zahnrad 61 ist schwenkbar angeordnet, sodass das Zahnrad 61 aus der Gewindestange 60 aus dem Zahneingriff heraus geschwenkt werden kann. Auf diese Weise kann die Gewindestange und letztlich das Messer (nicht dargestellt) schlagartig durch das Federpaket (nicht dargestellt) nach unten geführt werden. In erfindungsgemäßer Weise ist es jedoch auch möglich, dass zwischen dem Antriebsmotor 42 und dem Zahnrad 61 ein Kardangelenk 62 angeordnet ist, sodass nur das Zahnrad 61 verschränkt wird. Die Verschwenkung erfolgt durch nicht näher dargestellte Bewegungseinheiten.

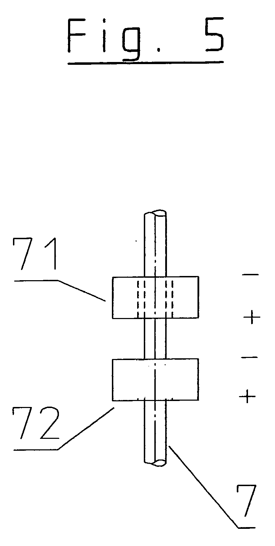

Figur 5 zeigt eine Rückholvorrichtung 4 in einer weiteren Ausführungsform für eine Vorrichtung zum Töten von Tieren gemäß Figur 3.

In diesem Fall ist über eine Stange 7 das Messer (nicht dargestellt) verbunden. Die Rückholvorrichtung 4 besteht in diesem Ausführungsbeispiel aus einer Elektromagnetenpaarung 71/72, wobei der Elektromagnet 71 fest mit der Stange 7 verbunden ist und die Stange 7 durch den Elektromagnet 71 beweglich durchgeführt ist. So lange die Elektromagneten 71/72 eine gegensätzliche Polarisierung haben, ziehen sie sich an. In diesem Fall wird dann die Stange 7 nach oben gezogen und das Federpaket (nicht dargestellt) gespannt. Wenn die Polarität eines der beiden Elektromagneten 71/72 geändert wird, stoßen sich die Elektromagnete voneinander ab, sodass die Stange 7 zusätzlich zur Unterstützung des Federpakets (nicht dargestellt) nach unten schießt. Am unteren Ende der Stange 7 befindet sich das Messer (nicht dargestellt).

Bei einer stärkeren elektromagnetischen Auslegung der Elektromagnete 71/72 kann in dieser Ausführungsform auf das Federpaket 3 verzichtet werden, sodass nur dieser Elektromagnet als Abschlussvorrichtung für das Messer (nicht dargestellt) dient.

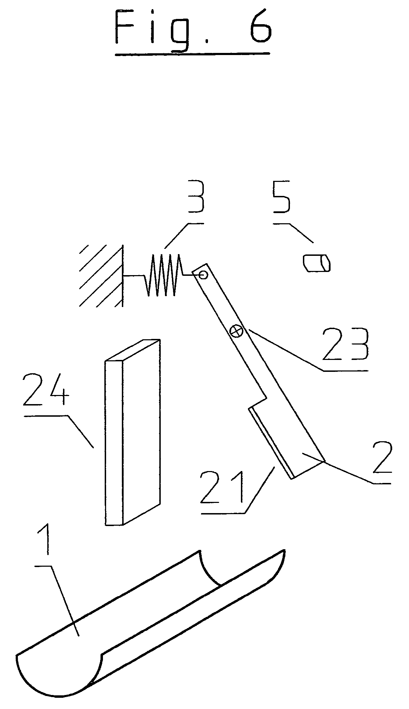

Figur 6 zeigt eine dritte erfindungsgemäße Ausführungsform. In dieser Ausführungsform ist das Messer 2 um einen Drehpunkt 23 drehbar angeordnet. Der Drehpunkt 23 ist örtlich statisch. An dem der Schneide 21 gegenüberliegenden Ende des Messers 2 ist ein Federpaket 3 (nur schematisch dargestellt) angeordnet. In der Ruheposition des Messers 2 ist das Federpaket 3 vorgespannt. Eine Auslösevorrichtung (nicht dargestellt) löst die Vorspannung der Feder, sodass das Messer 2 um den Drehpunkt 23 sich dreht, sodass die Schneide 21 an ein Prallbrett 24 schlägt.

In erfindungsgemäßer Weise kann jedoch auch bei dieser Ausführungsform ein Begrenzungselement 5 vorgesehen sein, sodass die Schneide 21 kurz vor dem Prallbrett 24 gestoppt wird und somit mangels Aufschlag ihre Schneidefähigkeit erhält.

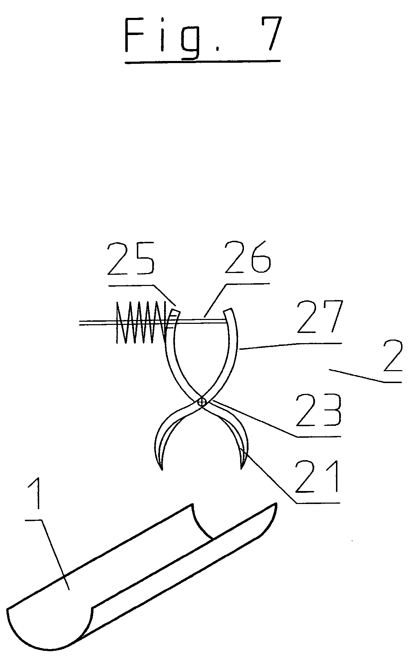

Figur 7 zeigt eine Abwandlung der dritten Ausführungsform gemäß Figur 6. In diesem Ausführungsbeispiel ist das Messer 2 scherenartig zweiteilig. Es besitzt ebenfalls den Drehpunkt 23. Ein Federpaket 3 (schematisch dargestellt) ist in der Ruheposition des Messers 2 gespannt. Das eine Federpaket 3 ist mit einem ersten Schenkel 25 verbunden. Das andere Ende des Federpakets 3 ist über eine Zugstange 26 mit einem zweiten Schenkel 27 verbunden. Wenn über eine Auslösevorrichtung (nicht dargestellt) das Federpaket 3 entspannt wird, schnellt der erste Schenkel 25 und der zweite Schenkel 27 auseinander und über den Drehpunkt 23 scherenartig das Messer 2 zusammen.

In dieser Ausführungsform ist es vorteilhaft, wenn die Schneide 21 bogenförmig ausgestaltet ist.

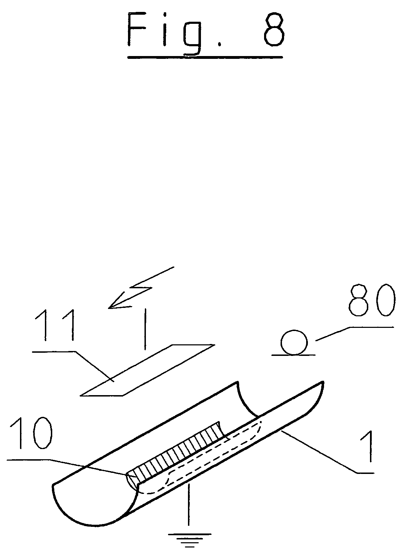

Figur 8 zeigt eine Tötungsvorrichtung mit Hilfe einer elektrischer Spannung. Hierzu ist in der Rinne 1 eine Metallplatte 10 angeordnet. Vorzugsweise oberhalb der Metallplatte 10 ist ein elektrischer Spannungsträger 11 angeordnet. Wenn das Tier den thermischen Sensor 80 aktiviert, wird an dem Spannungsträger 11 eine starke elektrische Spannung angelegt (nicht näher dargestellt). Das auf der Metallplatte 10 befindliche Tier (nicht dargestellt) reduziert den Abstand zwischen der Metallplatte 10 und dem Spannungsträger 11, so dass es zu einer elektrischen Entladung zwischen dem Spannungsträger 11 auf das Tier und vom diesem auf die Metallplatte 10 kommt. Hierbei wird das Tier getötet.

Es ist vorteilhaft, die Metallplatte 10 separat zu erden.

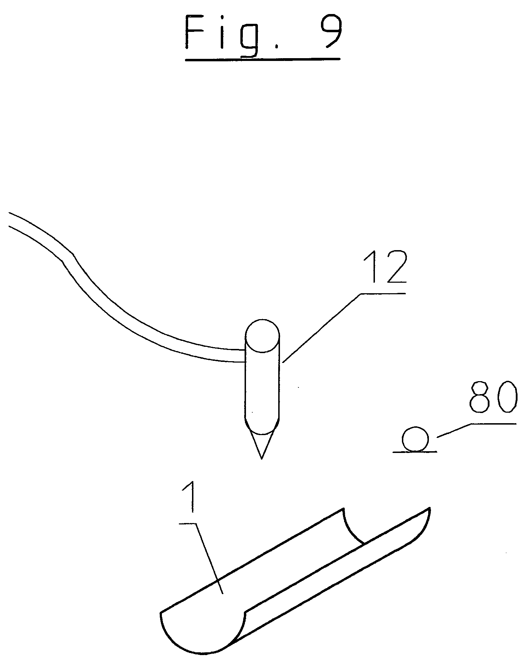

Figur 9 zeigt eine Tiertötungsvorrichtung mit dem Einsatz von toxischen Mitteln. Hierzu befindet sich in oder außerhalb der Rinne 1 eine Einlassöffnung 12. Wenn das Tier den thermischen Sensor 80 aktiviert, wird durch eine nicht näher dargestellte Sprühvorrichtung ein toxischer Stoff in Richtung des Tieres gesprüht. Da dies relativ schnell gehen soll, ist es vorteilhaft, wenn dieser gasförmige oder flüssige toxische Stoff unter Druck steht, so dass eine Öffnung eines Ventils (nicht dargestellt) das Versprühen dieses toxischen Stoffes durch die Einlassöffnung 12 bewirkt.

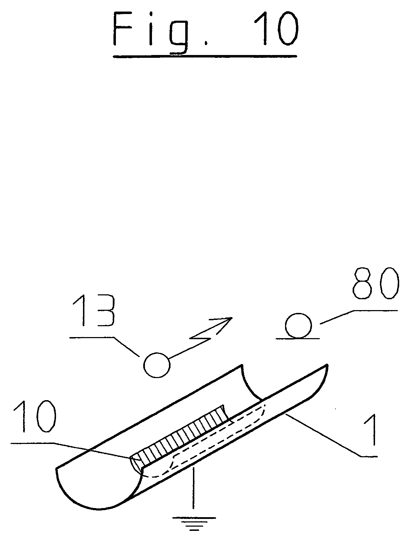

Figur 10 zeigt eine Tiertötungsvorrichtung unter Verwendung einer hochfrequenten Strahlung, vorzugsweise einer Mikrowellenstrahlung. Hierzu ist vorzugsweise oberhalb der Rinne 1 eine Sendeantenne 13 angeordnet. Wenn das Tier den thermischen Sensor 80 aktiviert, wird an diese Sendeantenne 13 eine hochfrequente Strahlungsenergie angelegt. Das Tier wirkt hierbei als Empfangsantenne, wobei diese Energie durch das Tier unmittelbar in der Rinne 1 oder an eine in der Rinne 1 sich befindliche Metallplatte 10 weitergeleitet wird.

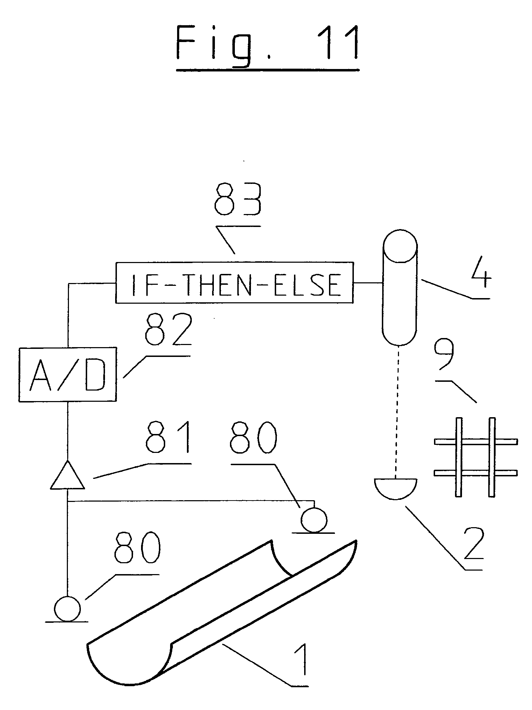

Figur 11 zeigt eine schematische Darstellung der Gesamtanlage. An mindestens einer Stelle der Rinne 1 ist ein thermischer Sensor 80 angeordnet. Der thermische Sensor 80 ist vorzugsweise mit einem Verstärker 81 verbunden. Anschließend kann ein Analog-Digital-Wandler 82 angeordnet sein. Letztlich wird das vom thermischen Sensor kommende Signal einer Auswertungseinheit 83 zugeführt. In der Auswertungseinheit 83 wird das vom thermischen Sensor kommende Signal mit einem vorher definierten Grenzwert verglichen. Wenn das vom thermischen Sensor 80 kommende Signal den vorher definierten Grenzwert überstreitet, wird ein Steuersignal ausgelöst, welches in den Figuren 1-5 näher beschriebene Tötungsvorrichtungen auslöst.

In vorteilhafter Weise ist vorzugsweise im Bereich der Rinne 1 eine Absperrvorrichtung 9 angeordnet, sodass verhindert wird, dass bei einer Betätigung einer thermischen Sensors 80 oder 80 - durch einen Menschen dieser durch die Tötungsvorrichtung verletzt wird. Die Absperrvorrichtung 9 muss so groß gestaltet sein, dass das zu tötende Tier problemlos die Absperrvorrichtung passieren kann. In diesem Ausführungsbeispiel ist die Absperrvorrichtung passieren kann. In diesem Ausführungsbeispiel ist die Absperrvorrichtung 9 als Gitter dargestellt. In erfindungsgemäßer Weise kann sie jedoch auch Bügel sein.

### Bezugszeichenliste

- 1: Rinne
- 2: Messer
- 21: Schneide
- 22: Durchbruch
- 23: Drehpunkt
- 24: Prallbrett
- 25: erster Schenkel
- 26: Zugstange
- 27: weiterer Schenkel
- 3: Federpaket
- 31: Spiralfeder
- 32: Wendelfeder
- 4: Rückholvorrichtung
- 411, 412: Kegelräder
- 42: Antriebsmotor
- 5: Begrenzungselement
- 60: Gewindestange
- 61: Zahnrad
- 62: Kardangelenk
- 7: Stange
- 71/72: Elektromagnet
- 80: Thermischer Sensor
- 81: Verstärker
- 82: Analog-Digital-Wandler
- 83: Auswertungseinheit
- 9: Absperrvorrichtung
- 10: Metallplatte
- 11: Spannungsträger
- 21: Einlassöffnung
- 13: Sendeantenne

## Patentansprüche

1. Verfahren zum Töten von Tieren, **dadurch gekennzeichnet, dass** ein Tier durch seine Körperwärme einen thermischen Sensor (80) anspricht, dass die von dem thermischen Sensor (80) ermittelte Temperatur in einer Auswertungseinheit (83) mit einem vorgegebenen Grenzwert verglichen wird, dass im Falle, dass die so ermittelte Temperatur über den vordefinierten Grenzwert liegt, eine Tötungsvorrichtung auslöst.

2. Verfahren zum Töten von Tieren nach Anspruch 1, **dadurch gekennzeichnet**, eine Abschussvorrichtung mit mindestens einem Messer durch die Auswertungseinheit (83) angesteuert wird, und dass die Abschussvorrichtung mindestens ein Messer (2) in Richtung des Tieres sich bewegt, wobei der hierbei von dem Messer (2) zurückgelegte Weg mindestens so groß ist, wie der Körperquerschnitt des Tieres, so dass das Messer (2) nach einer vollständigen oder weitgehenden Durchdringung des Tieres in einer Endposition anlangt, und dass anschließend über eine Rückholvorrichtung (4) das Messer (2) in seine Ausgangsposition zurückbefördert wird. Verfahren nach Anspruch 1 **dadurch gekennzeichnet, dass** die Tötung des Tieres durch einen elektrischen Stromschlag erfolgt, wobei sich das Tier auf einer geerdeten Metallplatte befindet und nahe dem Tier ein Spannungsträger angeordnet ist, sodass der elektrische Stromschlag vom Spannungsträger über das Tier an die geerdete Metallplatte geleitet wird.

3. Verfahren nach Anspruch 2), **dadurch gekennzeichnet, dass** das Messer (2) durch sein Eigengewicht bewegt wird.

4. Verfahren nach Anspruch 2), **dadurch gekennzeichnet, dass** das Messer (2) alleine oder zusätzlich zu seinem Eigengewicht durch eine Abschussvorrichtung bewegt wird.

5. Verfahren zum Töten von Tieren nach Anspruch 1, **dadurch gekennzeichnet, dass** nach Auslösung des thermischen Sensors (80) ein toxisches Mittel in Richtung des Tieres und/oder auf das Tier gesprüht wird.

6. Verfahren zum Töten von Tieren nach Anspruch 1, **dadurch gekennzeichnet, dass** nach Auslösung des thermischen Sensors (80) die Tötung durch eine hochfrequente Strahlung erfolgt.

7. Vorrichtungen zur Ausführung des Verfahrens nach Anspruch 1, **dadurch gekennzeichnet. dass** mindestens ein thermischer Sensor (80) angeordnet ist, welcher über eine Datenleitung mit einer Auswertungseinheit (83) zur Auslösung der Tötungsvorrichtung verbunden ist.

8. Vorrichtung nach Anspruch 7), **dadurch gekennzeichnet, dass** zwischen dem thermischen Sensor (80) und der Auswertungseinheit (83) ein Verstärker (81) und/oder ein Analog-Digital-Wandler (82) angeordnet ist.

9. Vorrichtungen nach Anspruch 7) oder 8), **dadurch gekennzeichnet, dass** die Tötungsvorrichtung aus einem Messer (2) besteht, welches mit einer Abschussvorrichtung und einer Rückholvorrichtung verbunden ist.

10. Vorrichtungen zum Töten von Tieren nach Anspruch 9), **dadurch gekennzeichnet, dass** die Abschussvorrichtung ein vorgespanntes Federpaket (3) ist.

11. Vorrichtung nach Anspruch 9), **dadurch gekennzeichnet, dass** die Abschussvorrichtung aus mindestens einem Elektromagnetenpaar (70/71) besteht.

12. Vorrichtung nach einem oder mehreren der Ansprüche 9) bis 11), **dadurch gekennzeichnet, dass** das Messer (2) einen Durchbruch (22) aufweist.

13. Vorrichtung nach einem oder mehreren der Ansprüche 9) bis 12), **dadurch gekennzeichnet, dass** die Rückholvorrichtung (4) aus einem Antriebsmotor (42) besteht, welcher mit einem Kegelrad (412) oder einem Zahnrad (61) verbunden ist, wobei das Kegelrad (412) bzw. das Zahnrad (61) aus dem Kegelrad (411) bzw. aus einer Gewindestange (61) heraus schwenkbar angeordnet ist.

14. Vorrichtung nach einem oder mehreren der Ansprüche 9) bis 13), **dadurch gekennzeichnet, dass** der Bewegungsweg des Messers (2) durch ein Begrenzungselement (5) begrenzt ist.

15. Vorrichtung nach einem oder mehreren der Ansprüche 9) bis 14, **dadurch gekennzeichnet, dass** das Messer (2) schwenkbar angeordnet ist.

16. Vorrichtung nach einer oder mehreren der Ansprüche 9) bis 14), **dadurch gekennzeichnet, dass** das Messer (2) scherenartig ausgebildet ist.

17. Vorrichtungen nach Anspruch 7) oder 8), **dadurch gekennzeichnet, dass** die Tötungsvorrichtung aus einet Metallplatte (10) und ein elektrischer Spannungsträger (11) besteht, welche so zueinander angeordnet sind, dass der Abstand zwischen der Metallplatte (10) und dem Spannungsträger (11) so groß ist, das Tier sich hindurch bewegen kann, und dass, zwischen der Metallplatte (10) und dem Spannungsträger (11) ein elektrisches Potenzial anliegt, welches so groß ist, dass es zu einer elektrischen Entladung vom Spannungsträger (11) durch das Tier hindurch auf die Metallplatte (10) erfolgt.

18. Vorrichtung nach Anspruch 30, **dadurch gekennzeichnet, dass** die Metallplatte (10) separat geerdet ist.

19. Vorrichtungen nach Anspruch 7) oder 8), **dadurch gekennzeichnet, dass** die Tötungsvorrichtung aus einer Einlassöffnung (21) für toxische Mittel besteht, und dass die Auswertungseinheit (83) eine Steuerverbindung zwischen der Auswertungseinheit (83) und mindestens einem Öffnungsventil besitzt.

20. Vorrichtung nach Anspruch 19, **dadurch gekennzeichnet, dass** das toxische Mittel unter Druck steht.

21. Vorrichtung nach Anspruch 19, **dadurch gekennzeichnet, dass** eine Pumpe zur Förderung des toxischen Mittels zur Einlassöffnung (21) vorgesehen ist.

22. Vorrichtung nach einem oder mehren Ansprüche 19) bis 21), **dadurch gekennzeichnet, dass** das toxische Mittel ein Giftgas ist.

23. Vorrichtung nach einem oder mehren Ansprüchen 19) bis 21) **dadurch gekennzeichnet, dass** das toxische Mittel eine giftige Flüssigkeit ist.

24. Vorrichtungen nach Anspruch 7) oder 8), **dadurch gekennzeichnet, dass** die Tötungsvorrichtung aus einer Sendeantenne (13) für hochfrequente und energiereiche Strahlung besteht.

25. Vorrichtung nach Anspruch 24, **dadurch gekennzeichnet, dass** eine geerdete Metallplatte (10) so angeordnet ist, dass das Tier zum Zeitpunkt der beabsichtigten Tötung sich hierauf befindet.

26. Vorrichtung nach einem oder mehreren der Ansprüche 9) bis 25, **dadurch gekennzeichnet, dass** eine Absperrvorrichtung (9) vorhanden ist.

27. Vorrichtung nach Anspruch 26), **dadurch gekennzeichnet, dass** die Absperrvorrichtung (9) eine Lichtschranke ist.

28. Vorrichtung nach Anspruch 26), **dadurch gekennzeichnet, dass** die Absperrvorrichtung (9) ein Gitter oder Bügel ist.
